# EUROPÄISCHE PATENTSCHRIFT

(11) **EP 0 525 557 B1**
(45) Veröffentlichungstag und Bekanntmachung des Hinweises auf die Patenterteilung: **07.02.1996**
(21) Anmeldenummer: 92112308.9
(22) Anmeldetag: 18.07.1992
(51) Int. Cl.: G01K 1/10

(54) **Temperaturmessvorrichtung**
Temperature measuring device
Dispositif pour mesurer la température

(30) Priorität: 27.07.1991 DE 9109308 U
(43) Veröffentlichungstag der Anmeldung: 03.02.1993
(73) Patentinhaber: HOECHST AKTIENGESELLSCHAFT, D-65926 Frankfurt am Main (DE)
(72) Erfinder: Ross, Bernd, W-4200 Oberhausen (DE); Koschnitzke, Walter, Verstorben (DE)

(56) Entgegenhaltungen:
- US-A- 2 875 614
- US-A- 3 106 493
- US-A- 4 721 533

## Beschreibung

Die Erfindung betrifft eine Vorrichtung zur Messung hoher Temperaturen in Druckreaktoren, insbesondere in Druckvergasungsreaktoren. Sie besteht aus einem Mantelthermoelement, das druckdicht gegenüber dem Reaktionsmedium oder der Reaktoratmosphäre abgeschlossen in mindestens einem metallischen Schutzrohr gelagert ist.

Zur Temperaturmessung werden in der Verfahrenstechnik vielfach Thermoelemente benutzt. Ihre Wirkungsweise beruht auf dem thermoelektrischen Effekt, der Erscheinung, daß in einem Kreis ein Strom fließt, sofern dessen Leiter aus zwei verschiedenen Metallen oder Legierungen zusammengesetzt sind und die Kontaktstellen (Lötstellen) der verschiedenen Metalle oder Legierungen auf verschiedenen Temperaturen gehalten werden. Bei geöffnetem Kreis kann man an den Enden eine Spannung messen, die der Temperaturdifferenz der beiden Lötstellen proportional ist. In der Praxis hält man eine Lötstelle auf konstanter Temperatur und bringt die andere Lötstelle als Fühler (Sonde) an den Meßort. Geeignete Thermopaare sowie die Grundwerte der zugehörigen Thermospannungen sind genormt. Als besonders vorteilhaft erweist sich, daß Thermoelemente auch bei sehr hohen Temperaturen zu gebrauchen sind und die Meßstelle punktförmig ist, so daß sie auch an schwer zugänglichen Stellen eingesetzt werden können. Darüber hinaus gestatten sie, durch Auswahl entsprechender Thermopaare, individuelle Meßprobleme zu lösen und abgegrenzte Temperaturbereiche zu erfassen. Bedeutsam ist in diesem Zusammenhang eine möglichst große Thermospannung je Kelvin Temperaturdifferenz, und eine möglichst lineare Spannungs-Temperatur-Charakteristik.

Um zu verhindern, daß die Thermoelemente beschädigt oder durch aggressive Medien im Reaktionsraum verändert oder zerstört werden, schützt man sie durch Metall- oder Keramikrohre. Man spricht in diesem Fall von Mantelthermoelementen. Das Thermoelementpaar wird mittels keramischer Röhrchen voneinander isoliert und in ein einseitig geschlossenes Rohr eingeschoben. Das äußere Rohr übernimmt den Schutz vor mechanischen Beanspruchungen. Die inneren Schutzrohre verhindern besonders das Eindiffundieren von Gasen, die die thermoelektrische Eigenschaften des Metallpaares beeinflussen können. Ein derartiges Mantelthermoelement wird in US-A-4 721 533 beschrieben.

Die Beständigkeit gegen mechanische und chemische Einflüsse stellt lediglich ein Grunderfordernis dar dem in der industriellen Praxis verwendete Thermoelemente genügen müssen. In Spezialfällen werden zusätzliche Forderungen an solche Temperaturmeßvorrichtungen gestellt.

Als Beispiel solcher Spezialfälle seien ausgemauerte Hochtemperaturreaktoren genannt, die zur Herstellung von Synthesegas durch Vergasung fossiler Brennstoffe wie Öl oder Steinkohle verwendet werden. In ihnen findet eine allmähliche Abtragung des Mauerwerkes statt. Um zu verhindern, daß der Stahlmantel des Reaktors durch Überhitzung zerstört wird, darf die Wandstärke des Mauerwerks nicht unter ein bestimmtes Mindestmaß absinken. Daher ist bei solchen Vergasungsanlagen, die je nach Einsatzmaterial bei Temperaturen von etwa 1000 bis etwa 1700°C betrieben werden, wegen der hohen Empfindlichkeit des Mauerwerks selbst gegen geringes Überschreiten der zulässigen Temperatur eine sehr genaue Temperaturmessung erforderlich. Die maximale Fehlergrenze darf etwa 10°C nicht überschreiten.

Zur Messung der Temperaturen in den genannten Bereichen verwendt man bevorzugt Platin-Rhodium-Platin-Thermoelemente, die im allgemeinen mit einem Rohr aus Aluminiumoxid ummantelt und zusätzlich mit einem äußeren Schutzrohr, gewöhnlich aus keramischem Material wie Aluminiumoxid, umhüllt sind.

Platin-Rhodium-Platin-Thermoelemente unterliegen in Vergasungsanlagen Schädigungen durch die Reaktoratmosphäre. Bedingt durch den hohen Druck von bis zu etwa 10 MPa läßt sich nicht vermeiden, daß die Reaktionsgase, insbesondere Wasserstoff, Kohlenmonoxid und gasförmige Schwefelverbindungen, zum Thermopaar gelangen. Wasserstoff führt zu einem Korngrenzwachstum des Elementmaterials, die Schwefelverbindungen haben seine Versprödung zur Folge, beide Ursachen führen zu einer Zerstörung des Thermoelements, zumindest aber zu einer Verfälschung der gemessenen Temperatur.

Bei der Vergasung von Steinkohle, die unter Schlackenbildung abläuft, kann zusätzlich Schlacke in die Schutzrohre eindringen und die Festigkeit des Aluminiumoxids durch Schmelzpunktabsenkung beeinträchtigen. Der Zutritt von Wasserstoff und gasförmigen Schwefelverbindungen zum Thermoelement wird dadurch erheblich erleichtert. Die gleichen Probleme treten bei Verwendung von Schutzrohren aus anderen keramischen Werkstoffen aber auch aus hochschmelzenden Metallen auf.

Es bestand daher die Aufgabe, eine Meßvorrichtung zu entwickeln, mit deren Hilfe die im Reaktionsraum von Druckreaktoren auftretende Temperatur über einen langen Zeitraum möglichst genau und unbeeinflußt vom Reaktionsmedium und der Reaktionsatmosphäre gemessen werden kann.

Die Erfindung besteht in einer Temperaturmeßvorrichtung, insbesondere für Druckvergasungsreaktoren. Sie ist gekennzeichnet durch ein einseitig geschlossenes, inneres Keramikrohr 1, welches ein Mantelthermoelement 2 enthält, ein ebenfalls einseitig geschlossenes Molybdänrohr 3, in dem das innere Keramikrohr 1 gleitend anliegt, ein so über das Molybdänrohr konzentrisch angeordnetes äußeres Keramikrohr 4, daß sich zwischen dem Molybdänrohr 3 und dem äußeren Keramikrohr 4 ein ringförmiger Raum ausbildet, der mit keramischer Stampfmasse 5 ausgefüllt ist, eine Flanschverbindung 6, die das Molybdänrohr 3 mit einem Kugelgelenk 7 verbindet und einem Faltenbalg 8, der das Kugelgelenk 7 mit einer Druckdurchführung 9 verbindet.

Die neue Temperaturmeßvorrichtung zeichnet sich durch hervorragende Druckdichtheit und Beständigkeit gegen aggressive Medien aus. Sie ist über einen deutlich längeren Zeitraum bei hoher Meßgenauigkeit betriebssicherer als herkömmliche Geräte der gleichen Gattung. Die Vorrichtung eignet sich insbesondere zur Messung von Temperaturen zwischen etwa 1000 und 1700°C. Selbstverständlich kann sie aber auch zur Ermittlung tieferer Temperaturen eingesetzt werden, insbesondere, wenn die Umstände, unter denen die Messung erfolgt, besonders druckdichte und resistente Mantelthermoelemente erfordert.

Entsprechend der Erfindung ist das Thermoelement in einem einseitig geschlossenen Rohr gelagert, das aus einem keramischen Werkstoff besteht (hier als inneres Keramikrohr bezeichnet). Als Rohrmaterial besonders bewährt hat sich Aluminiumoxid. Die Temperaturmessung erfolgt mit konventionellen, für den betreffenden Meßbereich geeigneten Thermoelementen. Bevorzugt wird die Kombination Platin/Rhodium, die zwischen 1000 und 1700°C eine ausreichend hohe Thermospannung ergibt. Die Thermodrähte sind gegeneinander isoliert, z.B. durch hitzebeständige Überzüge. Auch für diesen Zweck werden keramische Materialien, insbesondere Aluminiumoxid, bevorzugt.

Das innere Keramikrohr wird von einem druckdichten, rohrförmigen Metallmantel umgeben, in dem das Keramikrohr gleitend anliegt, so daß der unterschiedlichen Wärmeausdehnung der Werkstoffe Rechnung getragen werden kann. Dieser Metallmantel besteht aus reinem Molybdän, das als Werkstoff leicht zu bearbeiten ist und den Einflüssen reduzierender Medien, wie sie in Vergasungsreaktoren vorliegen, weitgehend widersteht. Die Mantelstärke ist abhängig von der Verwendungsart der Meßvorrichtung. Sie beträgt im allgemeinen 5 bis 20 mm, höhere oder niedere Wandstärken sind aber nicht ausgeschlossen.

Über dem Molybdänrohr ist konzentrisch ein äußeres Keramikrohr in der Weise angeordnet, daß sich zwischen dem Molybdänrohr und dem äußeren Keramikrohr ein ringförmiger Raum ausbildet. Dieser ringförmige Raum ist mit keramischer Stampfmasse ausgefüllt und fixiert das äußere Keramikrohr.

Unter den verschiedenen Materialien, aus denen das äußere Keramikrohr bestehen kann, wird wiederum Aluminiumoxid bevorzugt. Das Rohr hat ebenfalls Schutzfunktion und dient insbesondere dazu, Sauerstoff vom Molybdänrohr fernzuhalten. Seine Wirksamkeit kann bei Verwendung in Kohlevergasungsreaktoren durch Ablagerung von Feststoffen, die sich bei Abkühlung der geschmolzenen Schlackeanteile der Kohle bilden, unterstützt werden. Der ringförmige Raum zwischen Molybdänrohr und äußerem Keramikrohr wird zur Fixierung des Keramikrohres mit einer keramischen Stampfmasse ausgefüllt. Bewährt hat sich hierfür insbesondere Zirkondioxid.

Um Bewegungen des Reaktormauerwerks zu kompensieren, ist die erfindungsgemäße Temperaturmeßvorrichtung sphärisch gelagert. Zu diesem Zweck ist das Molybdänrohr über eine Flanschvorrichtung mit einem Kugelgelenk verbunden. Als Werkstoffe für dieses Kugelelement werden Nickellegierungen bevorzugt, z.B. solche, die unter dem Warenzeichen Hastalloy bekannt sind. Um die Beweglichkeit trotz durchgehender Druckdichtheit zu gewährleisten, sind Kugelgelenk und erste Druckdurchführung über einen Faltenbalg verbunden. Die Abdichtung des Anschlußraumes gegenüber der Außenatmosphäre, auch als zweite Druckdurchführung bezeichnet, erfolgt über handelsübliche Zündkerzen.

In der beigefügtten Zeichnung ist eine beispielhafte Ausführungsform der neuen Temperaturmeßvorrichtung dargestellt. In einem einseitig geschlossenen, inneren Keramikrohr 1 ist ein Mantelthermoelement 2 enthalten. Das innere Keramikrohr 1 liegt in einem ebenfalls einseitig geschlossenes Molybdänrohr 3, so daß seine äußere Oberfläche auf der inneren Oberfläche des Molybdänrohres 3 gleitet. Über dem Molybdänrohr 3 ist konzentrisch ein äußeres Keramikrohr 4 angeordnet. Zwischen Molybdänrohr und äußerem Keramikrohr bildet sich ein ringförmiger Raum aus, der mit keramischer Stampfmasse 5 ausgefüllt ist und das äußere Keramikrohr 4 fixiert. Das Molybdänrohr 3 ist durch eine Flanschverbindung 6 mit einem Kugelelement 7 verbunden und dadurch beweglich gelagert. Um die Beweglichkeit trotz durchgehender Druckdichtheit sicherzustellen, ist das Kugelgelenk über einen Faltenbalg 8 mit einer ersten Druckdurchführung 9 verbunden. Die Abdichtung eines Anschlußraumes 10 erfolgt über handelsübliche Zündkerzen 11.

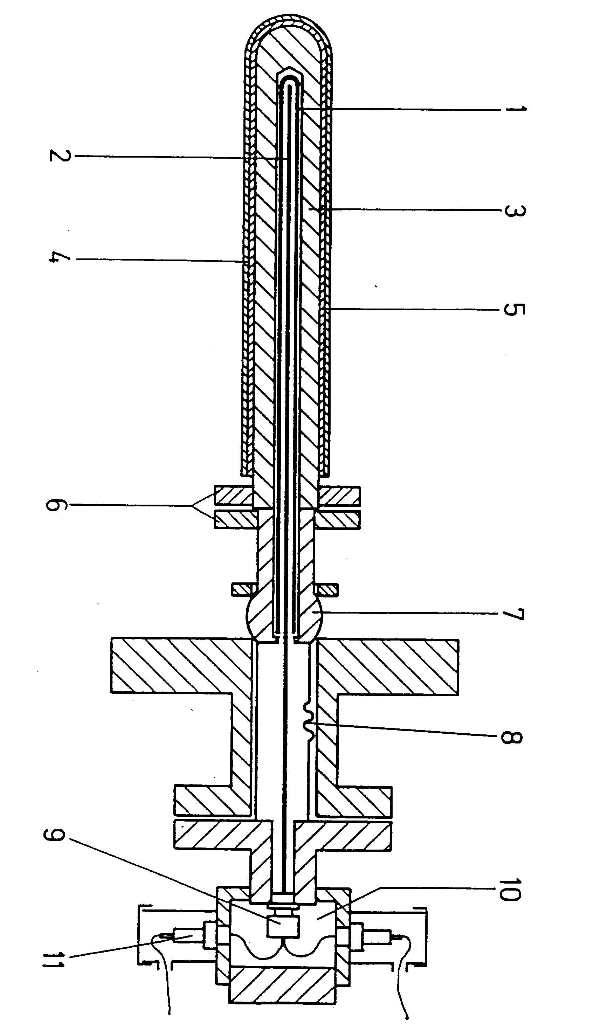

## Patentansprüche

1. Temperaturmeßvorrichtung, bestehend aus einem einseitig geschlossenen, inneren Keramikrohr (1), welches ein Mantelthermoelement (2) enthält, einem ebenfalls einseitig geschlossenen Molybdänrohr (3), in dem das innere Keramikrohr gleitend anliegt, einem so über dem Molybdänrohr konzentrisch angeordneten äußeren Keramikrohr (4), daß sich zwischen dem Molybdänrohr (3) und dem äußeren Keramikrohr (4) ein ringförmiger Raum ausbildet, der mit keramischer Stampfmasse (5) ausgefüllt ist, einer Flanschverbindung (6), die das Molybdänrohr (3) mit einem Kugelgelenk (7) verbindet und einem Faltenbalg (8), der das Kugelgelenk (7) mit einer Druckdurchführung (9) verbindet.

2. Temperaturmeßvorrichtung nach Anspruch 1, dadurch gekennzeichnet, daß das innere Keramikrohr aus Aluminumoxid besteht.

3. Temperaturmeßvorrichtung nach Anspruch 1 oder 2, dadurch gekennzeichnet, daß das äußere Keramikrohr aus Aluminiumoxid besteht.

4. Temperaturmeßvorrichtung nach einem oder mehreren der Ansprüche 1 bis 3, dadurch gekennzeichnet, daß der ringförmige Raum zwischen Molybdänrohr (3) und äußerem Keramikrohr (4) mit Zirkondioxid als keramischer Stampfmasse (5) ausgefüllt ist.

5. Temperaturmeßvorrichtung nach einem oder mehreren der Ansprüche 1 bis 4, dadurch gekennzeichnet, daß das Kugelgelenk (7) aus einer Nickellegierung als Werkstoff besteht.

6. Temperaturmeßvorrichtung nach einem oder mehreren der Ansprüche 1 bis 5, dadurch gekennzeichnet, daß der Faltenbalg (8) aus einer Nickellegierung als Werkstoff besteht.

## Claims

1. A temperature-measuring instrument, consisting an inner ceramic tube (1) which is closed on one side and contains a sheathed thermocouple (2), a molybdenum tube (3) likewise closed on one side with the inner ceramic tube bearing slidingly against it, an outer ceramic tube (4) which is concentrically arranged over the molybdenum tube in such a way that, between the molybdenum tube (3) and the outer ceramic tube (4), an annular space is formed which is filled with a ceramic tamped mass (5), a flanged joint (6) which joins the molybdenum tube (3) to a ball joint (7), and bellows (8) which join the ball joint (7) to a pressure-resistant bushing (9).

2. The temperature-measuring instrument as claimed in claim 1, wherein the inner ceramic tube is composed of alumina.

3. The temperature-measuring instrument as claimed in claim 1 or 2, wherein the outer ceramic tube is composed of alumina.

4. The temperature-measuring instrument as claimed in one or more of claims 1 to 3, wherein the annular space between the molybdenum tube (3) and the outer ceramic tube (4) is filled with zirconium dioxide as the ceramic tamped mass (5).

5. The temperature-measuring instrument as claimed in one or more of claims 1 to 4, wherein the ball joint (7) is made of a nickel alloy as material.

6. The temperature-measuring instrument as claimed in one or more of claims 1 to 5, wherein the bellows (8) are made of a nickel alloy as material.

## Revendications

1. Dispositif de mesure de température, constitué par un tube de céramique (1) intérieur fermé d'un côté, qui contient un couple thermoélectrique (2) à enveloppe, un tube de molybdène (3) également fermé d'un côté, un tube de céramique (4) extérieur agencé de manière concentrique au-dessus du tube de molybdène, de telle sorte qu'entre le tube de molybdène (3) et le tube de céramique (4) extérieur se forme un espace annulaire, qui est rempli de pisé (5) en céramique, qui contient un assemblage à bride (6) reliant le tube de molybdène (3) à une articulation sphérique (7), et un soufflet (8) qui relie l'articulation sphérique 7 à un passage de pression (9).

2. Dispositif de mesure de la température selon la revendication 1, caractérisé en ce que le tube de céramique intérieur est en alumine.

3. Dispositif de mesure de la température selon la revendication 1 ou 2, caractérisé en ce que le tube de céramique extérieur est en alumine.

4. Dispositif de mesure de la température selon l'une ou plusieurs des revendications 1 à 3, caractérisé en ce que l'espace annulaire entre le tube de molybdène (3) et le tube de céramique (4) extérieur est rempli de dioxyde de zirconium en tant que pisé en céramique.

5. Dispositif de mesure de la température selon l'une ou plusieurs des revendications 1 à 4, caractérisé en ce que le matériau de l'articulation sphérique (7) est en alliage de nickel.

6. Dispositif de mesure de la température selon une ou plusieurs des revendications 1 à 5, caractérisé en ce que le matériau du soufflet (8) est en alliage de nickel.
